# EUROPÄISCHE PATENTSCHRIFT

(11) **EP 3 532 317 B1**
(45) Veröffentlichungstag und Bekanntmachung des Hinweises auf die Patenterteilung: **19.05.2021**
(21) Anmeldenummer: 17783858.8
(22) Anmeldetag: 13.10.2017
(51) Int. Cl.: B60C 23/04

(54) **VERFAHREN ZUM BETREIBEN EINER REIFENDRUCKÜBERWACHUNGSEINHEIT SOWIE REIFENDRUCKÜBERWACHUNGSSYSTEM**
METHOD FOR OPERATING A TYRE PRESSURE MONITORING UNIT AND TYRE PRESSURE MONITORING SYSTEM
PROCÉDÉ PERMETTANT DE FAIRE FONCTIONNER UNE UNITÉ DE SURVEILLANCE DE PRESSION DE PNEU ET SYSTÈME DE SURVEILLANCE DE PRESSION DE PNEU

(30) Priorität: 26.10.2016 DE 102016120457
(43) Veröffentlichungstag der Anmeldung: 04.09.2019
(73) Patentinhaber: Huf Baolong Electronics Bretten GmbH, 75015 Bretten (DE)
(72) Erfinder: ALEXANDER, Markus, 76287 Rheinstetten (DE); WAGNER, Markus, 71638 Ludwigsburg (DE)
(74) Vertreter: Twelmeier Mommer & Partner
(86) Internationale Anmeldenummer: PCT/EP2017/076194
(87) Internationale Veröffentlichungsnummer: WO 2018/077631

(56) Entgegenhaltungen:
- US-A1- 2011 209 536
- US-A1- 2016 297 262

## Beschreibung

Die Erfindung geht aus von einem Verfahren mit den im Oberbegriff des Anspruchs 1 angegebenen Merkmalen, wie es beispielsweise aus der US 2016/297262 A1 bekannt ist. Ein ähnliches Verfahren ist aus der US 2011/209536 A1 bekannt.

Reifendrucküberwachungseinheiten eines Fahrzeugs enthalten neben Sensoren zur Messung des Reifendrucks in der Regel weitere Sensoren, beispielsweise Temperatur und Beschleunigungssensoren. Mit diesen Sensoren ermittelte Daten werden von Reifendrucküberwachungseinheiten in einem Datentelegramm drahtlos an eine Auswerteeinheit des Fahrzeugs übermittelt. Ein solches Datentelegramm enthält eine charakteristische Kennung der betreffenden Reifendrucküberwachungseinheit und verschiedene Felder, in denen verschiedene Daten, beispielsweise Druckdaten oder Temperaturdaten eingetragen sind.

Um das zu übertragende Datenvolumen zu reduzieren, wird in der Reifendrucküberwachungseinheit eine erste Auswertung von gemessenen Daten durchgeführt. Beispielsweise indem ein Parameter wie Druck oder Temperatur in sehr kurzen Abständen hintereinander mehrmals gemessen und dann ein Mittelwert gesendet wird. Die Abstände zwischen den einzelnen Messungen werden dabei so kurz gewählt, dass eine relevante Änderung der Messgröße zwischen den einzelnen Messungen nicht stattfinden kann. Wenn die einzelnen Messwerte dann dennoch zu stark voneinander abweichen, deutet dies daraufhin, dass wegen Störeinflüssen derzeit keine zuverlässige Messung möglich ist. Messungen der Beschleunigung eines Rades werden beispielsweise genutzt, um die Drehrichtung zu ermitteln. Die Drehrichtung wird dabei in der Regel aus der Phasenlage der Signale von zwei Beschleunigungssensoren ermittelt, was mehre Messungen erfordert. Störeinflüsse können dazu führen, dass sich die Phasenlage in der bis zum Aussenden des nächsten Datentelegramms zur Verfügung stehenden Zeit, d.h. mit einer vorgegebenen Anzahl von Messungen, nicht eindeutig ermitteln lässt.

Wenn eine Reifendrucküberwachungseinheit feststellt, dass die vorliegenden Messwerte keine zuverlässige Aussage ermöglichen, bleibt bei herkömmlichen Systemen das betreffende Datenfeld leer, enthält also beispielsweise den Wert Null, damit der zentralen Auswerteeinheit keine falschen Informationen übermittelt werden. Insbesondere bei stark verrauschten Messsignalen, wie sie beispielsweise bei der Fahrt über holprige Straßen von Beschleunigungssensoren geliefert werden, kann der Fall auftreten, dass in mehreren aufeinander folgenden Datentelegrammen einer Reifendrucküberwachungseinheit keine Daten des betreffenden Sensors übertragen werden und die zentrale Auswerteeinheit deshalb trotz umfangreicher Sendetätigkeit der Reifendrucküberwachungseinheit keine Informationen über die Drehrichtung oder eine andere Größe, die derzeit schwer zu ermitteln ist, erhält.

Aufgabe der vorliegenden Erfindung ist, einen Weg aufzuzeigen, wie die zentrale Auswerteeinheit eines Reifendrucküberwachungssystem auch unter widrigen Umständen schneller über alle relevanten physikalischen Größen eines Fahrzeugreifens informiert werden kann.

Diese Aufgabe wird durch ein Verfahren mit den im Anspruch 1 angegebenen Merkmalen sowie durch ein entsprechendes System gelöst. Vorteilhafte Weiterbildungen der Erfindung sind Gegenstand von Unteransprüchen.

Erfindungsgemäß ermittelt die Reifendrucküberwachungseinheit aus mehreren Messungen eine Information über die Zuverlässigkeit von Druckdaten und/oder einer aus Beschleunigungsdaten abgeleiteten Information und überträgt diese Information in einem Datentelegramm zusammen mit den Druckdaten und der aus den Beschleunigungsdaten abgeleiteten Information. Bei der aus den Beschleunigungsdaten abgeleiteten Information kann es sich beispielsweise um die Drehrichtung des betreffenden Rades handeln oder um die Radposition zu einem bestimmten Zeitpunkt, etwa dem Beginn des Datentelegramms. Wenn eine Information über die Zuverlässigkeit der Druckdaten gewonnen werden soll, werden dazu mehrere Messungen mit dem Drucksensor durchgeführt und ausgewertet. Wenn eine Information über die Zuverlässigkeit einer aus Beschleunigungsdaten abgeleiteten Information gewonnen werden soll, sind dazu mehrere Messungen des wenigstens einen Beschleunigungssensors erforderlich.

Im einfachsten Fall kann die Information über die Zuverlässigkeit als ein Flag, d. h. ein einzelnes Bit, in dem Datentelegramm enthalten sein, also angeben, ob z.B. die Information über die Drehrichtung zuverlässig oder unzuverlässig ist. Die Information über die Zuverlässigkeit kann aber auch ein Fehlerintervall angeben oder einen Wahrschein lichkeitswert.

Die zusätzlich in dem Datentelegramm enthaltene Information über die Zuverlässigkeit der Druckdaten oder sonstiger Daten ermöglicht es einer zentralen Auswerteeinheit unter Heranziehung zusätzlicher Daten dennoch eine belastbare Information zu gewinnen. Die zusätzlichen Daten können beispielsweise aus früheren Datentelegrammen der betreffenden oder einen anderen Reifendrucküberwachungseinheit oder aus sonstigen Sensoren des Fahrzeugs, beispielsweise ABS-Sensoren stammen.

Wenn beispielsweise eine Reifendrucküberwachungseinheit aus der Phasenlage von zwei Beschleunigungssignalen die Drehrichtung bestimmen möchte, kann es wegen Störeinflüssen vorkommen, dass 9 von 15 Messungen die Phasenlage eines linksdrehenden Rades und 6 von 15 Messungen die Phasenlage eines rechtsdrehenden Rades anzeigen. Insgesamt deutet ein solches Ergebnis darauf hin, dass sich das Rad linksherum dreht, dies ist jedoch nicht sicher. Wenn allerdings drei oder mehr aufeinanderfolgende Datentelegramme vergleichbare Informationen enthalten, die jeweils eine Linksdrehung des Rades etwas wahrscheinlicher als eine Rechtsdrehung erscheinen lassen, kann insgesamt mit großer Zuverlässigkeit angenommen werden, dass sich das Rad linksherum dreht.

Alternativ oder zusätzlich kann die Auswertung eines Datentelegramms auch unter Verwendung von Daten anderer Sensoren des Fahrzeugs erfolgen. Beispielsweise können zur Zuordnung der charakteristischen Kennung einer Reifendrucküberwachungseinheit zu einer bestimmten Radposition (z.B. vorne rechts), Daten eines ABS- Sensors verwendet werden. Bei der Fahrt drehen sich die verschiedenen Räder eines Fahrzeugs nämlich nicht genau gleich oft. Wenn die Raddrehungen, die von einer Reifendrucküberwachungseinheit aus Beschleunigungssignalen ermittelt werden, mit den von einem ABS-Sensor ermittelten Raddrehungen übereinstimmen, kann man deshalb darauf schließen, dass der betreffende ABS-Sensor und die Reifendrucküberwachungseinrichtung zu derselben Radposition gehören. Hierzu kann beispielsweise eine Soll-Sendebeginn-Drehwinkelstellung des Rades definiert werden, so dass die Reifendrucküberwachungseinheit mit dem Aussenden eines Datentelegramms nur dann beginnt, wenn sie durch Auswertung eines ihr vorliegenden Beschleunigungssignals zu dem Ergebnis gelangt, dass diese definierte Soll-Sendebeginn-Drehwinkelstellung jetzt erreicht ist. Die Ermittlung der Drehwinkelstellung ist dabei mit einer mehr oder weniger großen Unsicherheit behaftet. Tatsächlich kann die Reifendrucküberwachungseinheit nur gewährleisten, dass mit dem Aussenden eines Datentelegramms begonnen wird, wenn das Rad eine Drehwinkelstellung hat, die in einem mehr oder weniger großen Intervall liegt, in dem die definierte Soll-Sendebeginn-Drehwinkelstellung enthalten ist. Als Information über die Zuverlässigkeit kann hierbei ein Datentelegramm eine Information über die Größe des betreffenden Intervalls enthalten.

Weitere Einzelheiten und Vorteile der Erfindung werden an Ausführungsbeispielen unter Bezugnahme auf die beigefügten Zeichnungen erläutert. Gleiche und einander entsprechende Komponenten sind darin mit übereinstimmenden Bezugszeichen bezeichnet. Es zeigen:
- Fig. 1: eine schematische Darstellung eines Signals eines Beschleunigungssensors mit einer schwachen Störung;
- Fig. 2: eine schematische Darstellung eines Signals eines Beschleunigungssensors mit einer starken Störung;
- Fig. 3: eine schematische Darstellung für eine Zuordnung einer Reifendrucküberwachungseinrichtung zu einer Radposition A bzw. B unter Berücksichtigung von mittels ABS-Sensoren ermittelten Drehwinkelstellungen des betreffenden Rades;
- Fig. 4: Signale von zwei Beschleunigungssensoren, die in zwei zu einander senkrechten Richtungen empfindlich sind, sowie eine Digitalisierung dieser Signale;
- Fig. 5: eine Darstellung gemäß Fig. 4 bei umgekehrter Drehrichtung; und
- Fig. 6: eine Darstellung gemäß Fig. 4 mit Störeinflüssen.

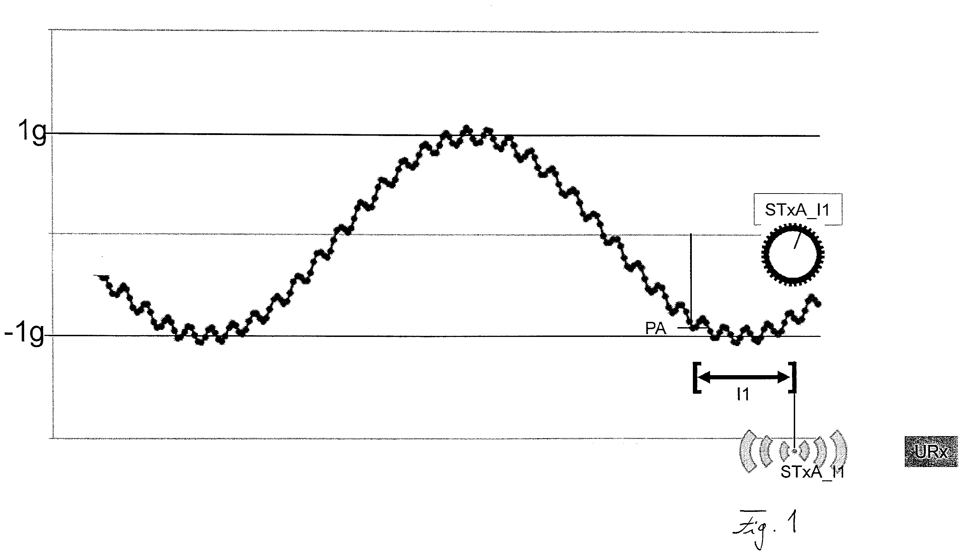

Der Beschleunigungssensor eines drehenden Rades liefert ein sinusförmiges Signal, das von mehr oder weniger starken Störungen überlagert wird, die beispielsweise durch Schwingungen des Rades oder Stöße durch Fahrbahnunebenheiten erzeugt werden. In Figur 1 ist schematisch ein Beispiel des Signals eines Beschleunigungssensors über der Zeit aufgetragen, wobei der Signalverlauf nur geringen Störungen unterliegt. Bei einem idealen Signalverlauf erreicht das Signal des Beschleunigungssensors nur bei einer einzigen genau definierten Drehwinkelstellung des Rades den Wert -1g (g=Erdbeschleunigung). Die Störungen führen dazu, dass sich die zu dem Signalwert -1g gehörende Radposition nur mit einer Unsicherheit feststellen lässt, die in Figur 1 durch das Intervall I1 angegeben ist.

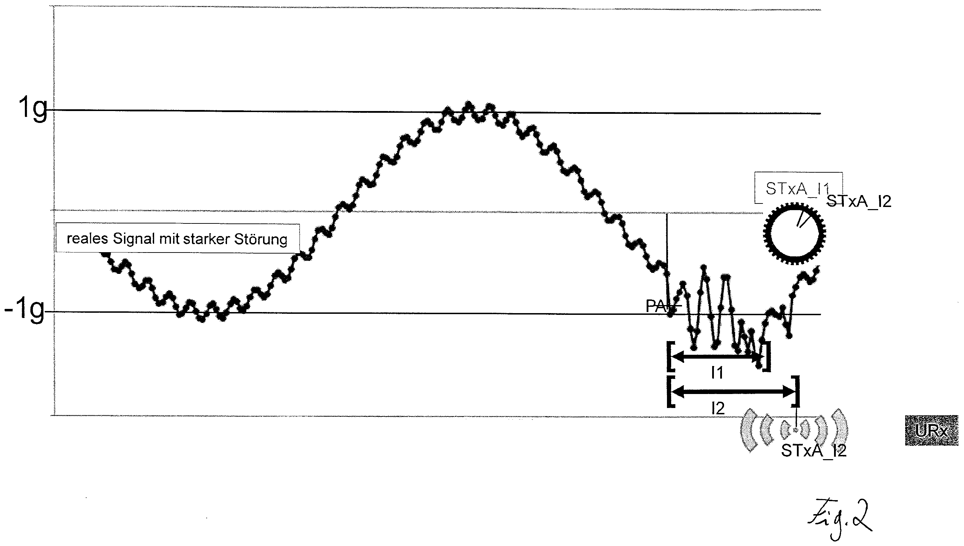

In Figur 2 ist zum Vergleich ein Signal eines Beschleunigungssensors dargestellt, das in dem hier interessierenden Abschnitt, bei dem das Beschleunigungssignal den Wert -1g erreicht, stark gestört ist. Bei dem Beispiel der Figur 2 lässt sich deshalb nur mit einer wesentlich größeren Unsicherheit feststellen, wann das Rad die Drehwinkelstellung hat, die bei idealem Signalverlauf zu dem Beschleunigungswert -1g gehört. Diese größere Unsicherheit ist durch ein größeres Intervall I2 angegeben.

Indem Datentelegramme von Reifendrucküberwachungseinheiten nur bei einer vorgegebenen Soll-Sendebeginn-Drehwinkelstellung ausgesandt werden, kann durch Synchronisation mit den Daten von ABS-Sensoren eine Zuordnung der einzelnen Reifendrucküberwachungseinheiten zu den verschiedenen Radpositionen eines Fahrzeugs erfolgen. Die einzelnen Räder eines Fahrzeugs drehen sich nämlich aus verschiedenen Gründen leicht unterschiedlich.

Eine Reifendrucküberwachungseinheit kann dazu beispielsweise so betrieben werden, dass ein Datentelegramm nur dann ausgesendet werden soll, wenn die Reifendrucküberwachungseinheit aufgrund der ihr vorliegenden Beschleunigungsdaten zu dem Ergebnis gelangt, dass das Rad jetzt eine vordefinierte Soll-Sendebeginn-Drehwinkelstellung innehat, beispielsweise die Drehwinkelstellung, bei der ein idealer Signalverlauf eines Beschleunigungssensors den Wert -1g liefert. Diese Radposition wird im Folgenden als 0° bezeichnet. Wie die Figuren 1 und 2 zeigen, lässt sich dieser Zeitpunkt aber nur mit einer Unsicherheit bestimmen, die durch das Intervall I1 bzw. das Intervall I2 charakterisiert ist. Diese Unsicherheit kann in dem Datentelegramm angegeben werden, beispielsweise in dem die Intervallgröße angegeben wird, mit dessen Genauigkeit der Zeitpunkt bestimmen lässt, zu dem die vordefinierte Soll-Sendebeginn-Drehwinkelstellung erreicht wird. Dabei kann das Datentelegramm einen Zahlenwert enthalten, der die Länge des betreffenden Intervalls angibt. Eine andere Möglichkeit besteht beispielsweise darin, dass das Datentelegramm lediglich ein zusätzliches Bit enthält, das angibt, ob der Zeitpunkt, zu dem die vordefinierte Reposition erreicht wurde, mit der Genauigkeit eines kleinen Intervalls I1 oder eines großen Intervalls I2 bestimmt wurde.

Eine zentrale Auswerteeinheit empfängt die Datentelegramme der verschiedenen Reifendrucküberwachungseinheiten, die jeweils eine charakteristische Kennung der betreffenden Überwachungseinheit enthalten, und wertet diese Informationen aus, um die betreffende Reifendrucküberwachungseinheit einer Radposition zuzuordnen. Wenn ein Datentelegramm empfangen wird, wird für jedes der in Frage kommenden Räder auch die von einem ABS Sensor ermittelte Drehwinkelstellung erfasst und mit der Drehwinkelstellung 0° verglichen, bei der die Reifendrucküberwachungseinheit mit dem Aussenden des Datentelegramms begonnen hat.

Wegen unvermeidlicher Messfehler sowohl der Reifendrucküberwachungseinheit als auch des ABS Sensors stimmen die von der Reifendrucküberwachungseinheit und dem ABS Sensor ermittelten Zeitpunkte, zu denen die Radposition 0° erreicht ist, nicht perfekt überein, so dass sich eine Zuordnung einer Reifendrucküberwachungseinheit zu einer Radposition nur durch Auswertung mehrerer Datentelegramme vornehmen lässt. Erfindungsgemäß wird dazu eine statistische Auswertung durchgeführt, bei der Datentelegramme, bei denen die Zuverlässigkeit der aus den Beschleunigungsdaten abgeleiteten Information höher ist, ein größeres Gewicht erhalten und Datentelegramme, bei denen die Zuverlässigkeit der aus den Beschleunigungsdaten abgeleiteten Information kleiner ist, mit einem geringeren Gewicht berücksichtigt werden.

Die zentrale Auswerteeinheit des Reifendrucküberwachungssystems betrachtet dazu mehrere Datentelegramme, die nacheinander empfangen wurden und ermittelt, für welchen ABS Sensor mit welcher Reifendrucküberwachungseinheit, die durch ihre charakteristische Kennung identifiziert wird, die größte Übereinstimmung hinsichtlich der Radpositionen vorliegt. Diese Zuordnung lässt sich verbessern, indem Datentelegramme, bei denen die betreffende Radposition mit größerer Zuverlässigkeit bestimmt werden konnte, ein größeres statistisches Gewicht erhalten, bei dem dargestellten Ausführungsbeispiel sind dies also die Datentelegramme, bei denen die betreffende Radposition 0° in dem kleineren Intervall I1 festgelegt werden konnte. Eine einfache Möglichkeit besteht nun darin, Datentelegramme mit dem kleineren Intervall I1 doppelt so stark zu gewichten wie Datentelegramme mit dem größeren Intervall I2.

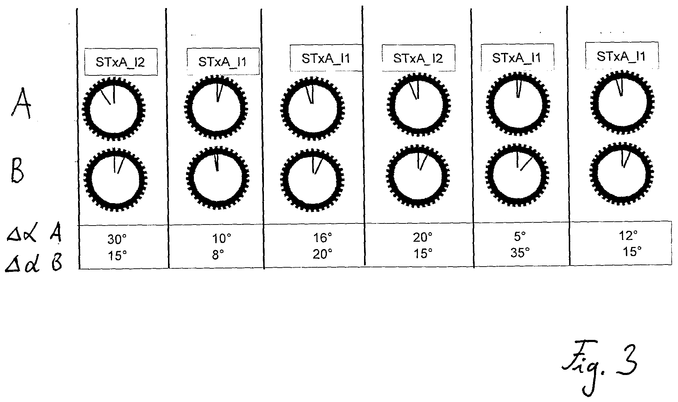

Figur 3 zeigt schematisch wie auf diese Weise eine Reifendrucküberwachungseinheit einer Radposition A oder B zugeordnet werden kann. In Figur 3 wird davon ausgegangen, dass die Reifendrucküberwachungseinheit ein Datentelegramm nur dann aussenden soll, wenn das betreffende Rad die 12 Uhr Position erreicht hat. In Figur 3 ist für sechs verschiedene Datentelegramme jeweils eingetragen, welche Drehwinkelstellung bei Empfang eines Datentelegramms von einem ABS Sensor der Radposition A und einem ABS Sensor der Radposition B gemessen wird. Die Abweichung Δα der vom ABS Sensor gemessenen Drehwinkelstellung von der idealen 12 Uhr oder 0° Position ist in Figur 3 jeweils für beide Radpositionen als Δα A bzw. Δα B angegeben. Zudem ist jeweils angegeben, ob die Radposition von der Reifendrucküberwachungseinheit mit großer Zuverlässigkeit (STxA_I1), also innerhalb des kleinen Intervalls I1, oder nur mit geringer Zuverlässigkeit (STx_I2), also innerhalb des größeren Intervalls I2 ermittelt werden konnte. Mit dem Aussenden des Datentelegramms kann am Ende des Intervalls begonnen werden, wie dies in den Figuren 1 und 2 angedeutet ist, oder zu einem beliebigen Zeitpunkt innerhalb des Intervalls I1 bzw. I2.

Für die Radposition A ergeben sich bei dem dargestellten Ausführungsbeispiel Abweichungen Δα in Höhe von 30°, 10°, 16°, 20°, 5° und 12°. Bei einfacher Gewichtung aller sechs Beispiele ergibt dies ein Mittelwert von 15,5°. Für die Radposition B ergeben die in Figur 3 dargestellten sechs Beispiele Abweichungen von 15°, 8°, 20°, 15°, 35° und 15°. Bei einer einfachen Gewichtung aller Datentelegramme ergibt dies ein Mittelwert von 18,0°. Die mittlere Abweichung ist im Falle der Radposition B also etwas größer. Dies spricht für eine Zuordnung der Reifendrucküberwachungseinheit zur Radposition A, allerdings ist diese Zuordnung recht unsicher.

Eine deutlichere Zuordnung lässt sich erreichen, indem Datentelegramme mit größerer Genauigkeit, also dem kleineren Intervall I1, doppelt gewichtet werden und Datentelegramme mit dem Intervall I2 nur einfach gewichtet werden. In diesem Fall ergibt sich für die Radposition A ein gewichteter Mittelwert von 13,6° und für die Radposition B ein gewichteter Mittelwert von 18,6°. Die Zuordnung der betreffenden Reifendrucküberwachungseinheit zur Radposition A lässt sich somit deutlich zuverlässiger vornehmen.

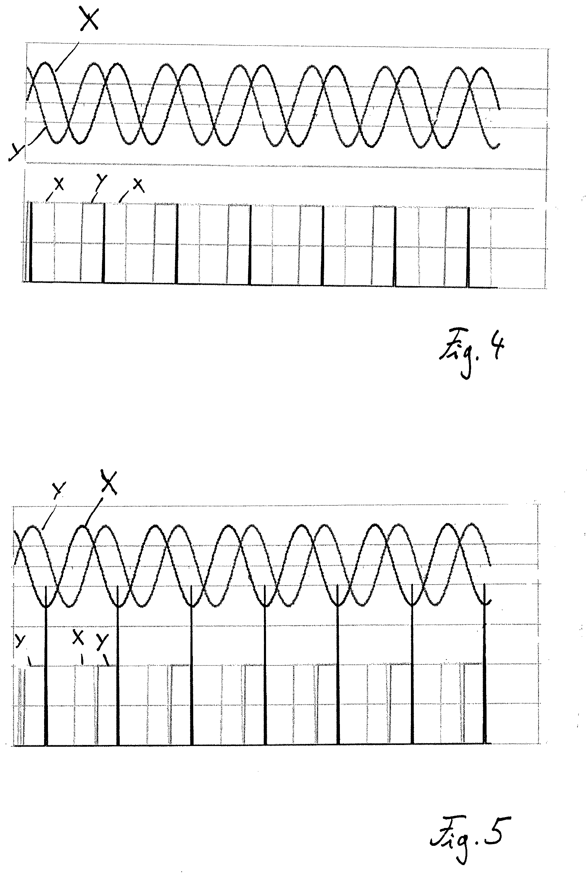

Die Fig. 4 bis 6 betreffen die Erkennung der Drehrichtung eines Rades mittels Signalen von zwei Beschleunigungssensoren, die in zwei zueinander senkrechten Raumrichten empfindlich sind, nämlich in X-Richtung (radial) und Y-Richtung (tangential). Wie Fig. 4 zeigt, sind das Signal des in X-Richtung sensitiven Beschleunigungssensors und das Signal des in Y-Richtung sensitiven Beschleunigungssensors 90° phasenverschoben. Diese Phasenlage kehrt sich um, wenn die Drehrichtung des Rades umgekehrt wird, was in Fig. 5 dargestellt ist. Fig. 4 zeigt als Beispiel die Signalverläufe bei einer Raddrehung gegen den Uhrzeigersinn, Fig. 5 bei einer Raddrehung im Uhrzeigersinn.

Die Phasenlage der Signale der beiden Beschleunigungssensoren kann deshalb verwendet werden, um linksdrehende Räder von rechtsdrehenden Rädern zu unterschieden. Zur Bestimmung der Phasenlage kann das Beschleunigungssignal digitalisiert werden, was jeweils in der unteren Bildhälfte der Figuren 4 und 5 dargestellt ist. Dazu kann man beispielsweise den Signalen jeweils den Wert 1 zuordnen, wenn das sinusförmige Signal einen Wert von 0,5 oder mehr hat. Im Übrigen ist bei dem Beispiel der Figuren 4 und 5 der Wert des digitalisierten Signals Null. Durch eine Logikprüfung lässt sich dann an den digitalisierten Signalen feststellen, ob das Signal des in X-Richtung empfindlichen Sensors oder das Signal des in Y-Richtung empfindlichen Sensors in seiner Phasenlage vorausgeht. Bei den in den Figuren 4 und 5 gezeigten Signalverläufen lässt sich die Drehrichtung des Rades jeweils eindeutig bestimmen, da stets auf einen hohen Wert des digitalisierten Signals des in Y-Richtung empfindlichen Sensors ein hoher Wert des digitalisierten Signals des in X-Richtung empfindlichen Sensors folgt (Fig.4) bzw. umgekehrt (Fig. 5).

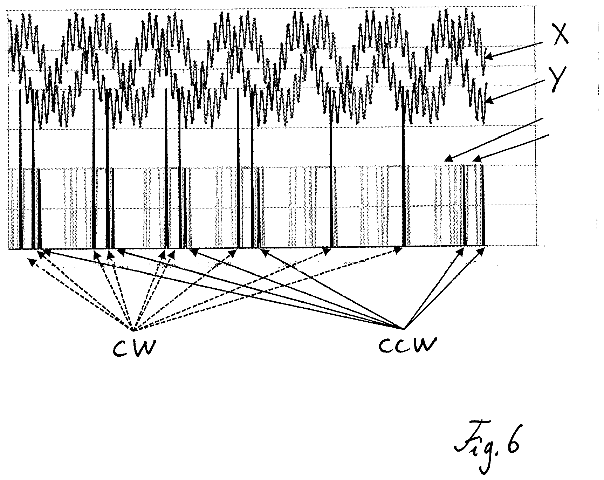

Wenn die Signale der Beschleunigungssensoren verrauscht sind, wie dies schematisch in Fig. 6 dargestellt ist, führt eine entsprechende Auswertung nicht mehr zu einem eindeutigen Ergebnis. Bei dem in Fig. 6 gezeigten Ausführungsbeispiel ergeben sich 10 Wechsel der digitalisierten Signale der Beschleunigungssensoren, die eine Drehung im Uhrzeigersinn (CW) andeuten, und 6 Wechsel der digitalisierten Signale, die eine Drehung gegen den Uhrzeigersinn (CCW) andeuten. Auf der Grundlage eines solches Ergebnisses lässt sich nicht zuverlässig entscheiden, ob sich das betreffende Rad im Uhrzeigersinn oder gegen den Uhrzeigersinn dreht.

Eine Reifendrucküberwachungseinheit hat vor dem Aussenden eines Datentelegramms nur wenig Zeit zur Verfügung, typischer Weise nur einige Raddrehungen. Manchmal lässt sich auch auf der Grundlage nur weniger Raddrehungen trotz Störeinflüssen ein zuverlässiges Ergebnis über Drehrichtung ermitteln, beispielsweise wenn 75% oder mehr ermittelten Phasenlagen eine bestimmte Drehrichtung angeben. Bei dem vorstehend beschriebenen Ergebnis der Fig. 6 ist das Ergebnis mit 10 zu 6 aber nicht so deutlich.

Anstatt nun gar keine Information über Drehrichtung auszusenden, kann die Reifendrucküberwachungseinheit beispielsweise in einem Datentelegramm angeben, dass die Drehrichtung des Beispiels von Fig. 6 im Uhrzeigersinn ist (CW) und zusätzlich in dem Datentelegramm ein Flag setzen, das angibt, dass diese Information über die Drehrichtung unsicher ist. Eine andere Möglichkeit besteht darin, in dem Datentelegramm einen Wert anzugeben, der die Unsicherheit quantifiziert, also mit der Wahrscheinlichkeit korreliert, dass die angegebene Drehrichtung zutrifft, bzw. diese Wahrscheinlichkeit explizit angibt. Dazu kann in dem Datentelegramm für das Beispiel der Fig. 6 beispielsweise ein Wert 10/6 gesendet werden oder es können explizit die Anzahl der ermittelten Phasenlagen angegeben werden, die für eine Drehung im Uhrzeigersinn (also 10) und für eine Drehung gegen den Uhrzeigersinn (also 6) sprechen.

Die zentrale Auswerteeinheit des Systems kann dann eine unzuverlässige Information zusammen mit weiteren Informationen auswerten und so zu einem zuverlässigen Ergebnis gelangen. Die weiteren Informationen können im einfachsten Fall weitere Datentelegramme derselben Reifendrucküberwachungseinheit sein. Beispielsweise kann eine unzuverlässige Information über die Drehrichtung als zuverlässig eingestuft werden, wenn diese unzuverlässige Information in mehreren aufeinander folgenden Datentelegrammen enthalten ist. Dabei kann ein Schwellenwert für die Anzahl der Datentelegramme festgelegt werden, die mit einer unzuverlässigen Information aufeinander folgen müssen, damit die Information als zuverlässig eingestuft wird, etwa wenigstens 3 oder wenigstens 4 aufeinanderfolgende Datentelegramme mit übereinstimmender Information über die Drehrichtung.

Eine andere Möglichkeit besteht darin, dass Datentelegramme anderer Reifendrucküberwachungseinheiten des Fahrzeugs berücksichtigt werden. Die zentrale Auswerteeinheit kann nämlich davon ausgehen, dass sich die Hälfte Räder im Uhrzeigersinn und die andere Hälfte entgegen dem Uhrzeigersinn dreht. Alternativ oder zusätzlich kann die zentrale Auswerteeinheit auch andere Fahrzeugsensoren bei der Auswertung berücksichtigen.

## Patentansprüche

1. Verfahren zum Zuordnen einer Reifendrucküberwachungseinheit, die an einem Rad eines Fahrzeugs montiert ist und wenigstens einen Drucksensor sowie wenigstens einen Beschleunigungssensor enthält, zu einer Radposition des Fahrzeugs, wobei
aus Messungen des wenigstens einen Drucksensors und des wenigstens einen Beschleunigungssensors Druck- und Beschleunigungsdaten ermittelt werden, und
die Druckdaten und wenigstens eine aus den Beschleunigungsdaten abgeleitete Information in einem Datentelegramm zusammen mit einer charakteristischen Kennung der Reifendrucküberwachungseinheit drahtlos gesendet werden,
in der Reifendrucküberwachungseinheit anhand der Messungen eine Information über die Zuverlässigkeit der aus den Beschleunigungsdaten abgeleiteten Information gewonnen wird,
diese Information über die Zuverlässigkeit der aus den Beschleunigungsdaten abgeleiteten Information mit dem Datentelegramm ausgesendet wird, und
eine zentrale Auswerteeinheit mehrere Datentelegramme betrachtet und unter Berücksichtigung von Daten von ABS-Sensoren die einzelnen Reifendrucküberwachungseinheiten zu den Radpositionen des Fahrzeugs zuordnet, wobei bei dieser Zuordnung Datentelegramme, bei denen die Zuverlässigkeit der aus den Beschleunigungsdaten abgeleitete Information höher ist, ein größeres Gewicht erhalten und Datentelegramme, bei denen die Zuverlässigkeit der aus den Beschleunigungsdaten abgeleitete Information kleiner ist, mit einem geringeren Gewicht berücksichtigt werden,
**dadurch gekennzeichnet, dass** die Datentelegramme bei der Auswertung ein Gewicht erhalten, das proportional zu der Zuverlässigkeit der aus den Beschleunigungsdaten abgeleiteten Information ist.

2. Verfahren nach Anspruch 1, **dadurch gekennzeichnet, dass** eine Soll-Sendebeginn-Drehwinkelstellung des Rades definiert ist und mit dem Aussenden des Datentelegramms zu einem Zeitpunkt begonnen wird, in dem sich das Rad nach den Beschleunigungsdaten in der Soll-Sendebeginn-Drehwinkelstellung befindet, wobei die Information über die Zuverlässigkeit der aus den Beschleunigungsdaten abgeleiteten Information ein Intervall um die Soll-Sendebeginn-Drehwinkelstellung angibt, in dem sich das Rad befunden hat, als mit der Aussendung des Datentelegramms begonnen wurde.

3. Verfahren nach Anspruch 2, **dadurch gekennzeichnet, dass** für jedes Rad aus Daten von ABS-Sensoren ermittelt wird, in welcher Drehwinkelstellung es sich befunden hat, als mit dem Aussenden des Datentelegramms begonnen wurde, und für jedes Rad die Abweichung dieser ermittelten Drehwinkelstellung von der Soll-Sendebeginn-Drehwinkelstellung berechnet wird,
wobei aus einer Serie von Datentelegrammen, die jeweils dieselbe charakteristische Kennung enthalten, für jedes Rad ein gewichteter Mittelwert der Abweichungen berechnet wird und die Reifendrucküberwachungseinheit der betreffenden charakteristischen Kennung dem Rad zugeordnet wird, für welches der gewichtete Mittelwert der Abweichungen am kleinsten ist,
wobei bei der Berechnung des gewichteten Mittelwerts Abweichungen, die für Datentelegramme berechnet wurden, bei denen die Zuverlässigkeit der aus den Beschleunigungsdaten abgeleitete Information höher ist, ein größeres Gewicht erhalten, und Datentelegramme, bei denen die Zuverlässigkeit der aus den Beschleunigungsdaten abgeleitete Information kleiner ist, mit einem geringeren Gewicht berücksichtigt werden.

4. Verfahren nach einem der vorstehenden Ansprüche, **dadurch gekennzeichnet, dass** die Beschleunigungsdaten aus Beschleunigungsmessungen eines ersten Beschleunigungssensors, der für Beschleunigungen in einer ersten Richtung empfindlich ist, und Beschleunigungsmessungen eines zweiten Beschleunigungssensors, der für Beschleunigungen in einer zur ersten Richtung senkrechten zweiten Richtung, empfindlich ist, gewonnen werden.

5. Verfahren nach Anspruch 4, **dadurch gekennzeichnet, dass** die aus den Beschleunigungsdaten abgeleitete Information die Drehrichtung angibt.

6. Verfahren nach Anspruch 5, **dadurch gekennzeichnet, dass** die Information über die Zuverlässigkeit der aus den Beschleunigungsdaten abgeleiteten Information mit der Wahrscheinlichkeit korreliert, dass die von der Reifendrucküberwachungseinheit übermittelte Drehrichtung zutreffend ist.

7. Verfahren nach einem der Ansprüche 1 bis 5, **dadurch gekennzeichnet, dass** die Information über die Zuverlässigkeit der aus den Beschleunigungsdaten abgeleiteten Information in dem Datentelegramm als ein Flag enthalten ist.

8. System zur Reifendrucküberwachung mit Reifendrucküberwachungseinheiten, die nach einem Verfahren der vorstehenden Ansprüche arbeiten, und einer zentralen Auswerteeinheit, welche von den Reifendrucküberwachungseinheiten ausgesandte Datentelegramme empfängt und auswertet, wobei die zentrale Auswerteeinheit die in einem Datentelegramm enthaltenen Beschleunigungsdaten abgeleitete Information unter Berücksichtigung der Information über die Zuverlässigkeit dieser aus den Beschleunigungsdaten abgeleiteten Information sowie weiteren Daten auswertet, die von ABS-Sensoren geliefert werden.

## Claims

1. A method for assigning a tyre pressure monitoring unit, which is mounted on a wheel of a vehicle and comprises at least one pressure sensor and at least one acceleration sensor, to a wheel position of the vehicle, wherein
pressure and acceleration data are determined from measurements of the at least one pressure sensor and the at least one acceleration sensor, and
the pressure data and information derived from the acceleration data are transmitted wireless in a data telegram together with a characteristic identifier of the tyre pressure monitoring unit,
information concerning the reliability of the information derived from the acceleration data is acquired in the tyre pressure monitoring unit on the basis of the measurements,
this information concerning the reliability of the information derived from the acceleration data is transmitted with the data telegram, and
a central evaluation unit considers a plurality of data telegrams and, taking account of data from ABS sensors, assigns the individual tyre pressure monitoring units to the wheel positions of the vehicle, wherein in this assignment, data telegrams in which the reliability of the information derived from the acceleration data is higher receive a greater weighting and data telegrams in which the reliability of the information derived from the acceleration data is smaller are taken into account with a smaller weighting, **characterised in that** the data telegrams receive a weighting in the evaluation which is proportional to the reliability of the information derived from the acceleration data.

2. The method according to claim 1, **characterised in that** a rotation angle position of the wheel for a set-point start of transmission is defined and the transmission of the data telegram is started at a point in time at which the wheel is located according to the acceleration data in the rotation angle position for the set-point start of transmission, wherein the information concerning the reliability of the information derived from the acceleration data indicates an interval around the rotation angle position for the set-point start of transmission, in which interval the wheel was located when the transmission of the data telegram was started.

3. The method according to claim 2, **characterised in that** it is determined for each wheel from data from ABS sensors in which rotation angle position it was located when the transmission of the data telegram was started, and the deviation of this ascertained rotation angle position from the rotation angle position for the set-point start of transmission is calculated for each wheel,
wherein a weighted mean value of the deviations is calculated for each wheel from a series of data telegrams, which each contain the same characteristic identifier, and the tyre pressure monitoring unit of the respective characteristic identifier is assigned to the wheel for which the weighted mean value of the deviations is the smallest,
wherein, in the calculation of the weighted mean value, deviations which have been calculated for the data telegrams for which the reliability of the information derived from the acceleration sensors is higher receive a greater weighting, and data telegrams in which the reliability of the information derived from the acceleration data is smaller are taken into account with a smaller weighting.

4. The method according to any one of the preceding claims, **characterised in that** the acceleration data from the acceleration measurements of a first acceleration sensor, which is sensitive for accelerations in a first direction, and acceleration measurements of a second acceleration sensor, which is sensitive for accelerations in a second direction at right angles in the first direction, are obtained.

5. The method according to claim 4, **characterised in that** the information derived from the acceleration data indicates the direction of rotation.

6. The method according to claim 6, **characterised in that** the information concerning the reliability of the information derived from the acceleration data correlates with the probability that the direction of rotation transmitted by the tyre pressure monitoring unit is correct.

7. The method according to any one of claims 1 to 6, **characterised in that** the information concerning the reliability of the information derived from the acceleration data is contained in the data telegram as a flag.

8. A system for tyre pressure monitoring with tyre pressure monitoring units, which operate according to a method of the preceding claims, and a central evaluation unit, which receives and evaluates data telegrams transmitted by the tyre pressure monitoring units, wherein the central evaluation unit evaluates the information derived from the acceleration data contained in a data telegram taking account of the information concerning the reliability of this information derived from the acceleration data as well as other data which are supplied by ABS sensors.

## Revendications

1. Procédé permettant de faire fonctionner une unité de surveillance de pression
de pneus qui est montée sur une roue d'un véhicule et contient au moins un capteur de pression ainsi qu'au moins un capteur d'accélération, par rapport à une position de roue du véhicule, dans lequel
des données de pression et d'accélération sont déterminées à partir de mesures de l'au moins un capteur de pression et de l'au moins un capteur d'accélération, et
les données de pression et au moins une information dérivée des données d'accélération sont envoyées sans fil rassemblées dans un télégramme de données avec une identification caractéristique de l'unité de surveillance de pression de pneus,
une information concernant la fiabilité de l'information dérivée des données d'accélération est reçue dans l'unité de surveillance de pression de pneus sur la base des mesures,
cette information concernant la fiabilité de l'information dérivée des données d'accélération est envoyée avec le télégramme de données, et
une unité d'évaluation centrale examine plusieurs télégrammes de données et associe, en tenant compte des données des capteurs ABS, les unités de surveillance de pression de pneus individuelles aux positions des roues du véhicule, où, lors de cette association, des télégrammes de données chez lesquels la fiabilité de l'information dérivée des données d'accélération est plus élevée, reçoivent une pondération plus élevée, et des télégrammes de données, chez lesquels la fiabilité de l'information dérivée des données d'accélération est plus faible, sont pris en compte avec une pondération plus faible,
**caractérisé en ce que** les télégrammes de données obtiennent une pondération lors de l'évaluation qui est proportionnelle à la fiabilité de l'information dérivée à partir des données d'accélération.

2. Procédé selon la revendication 1, **caractérisé en ce qu'**une position d'angle de rotation de début d'envoi désirée de la roue est définie et on commence l'envoi du télégramme de données à un instant dans lequel la roue se trouve dans la position d'angle de rotation de début d'envoi désirée selon les données d'accélération, où l'information concernant la fiabilité de l'information dérivée des données d'accélération indique un intervalle autour de la position d'angle de rotation de début d'envoi désirée dans lequel la roue s'est trouvée quand on a commencé l'envoi du télégramme de données.

3. Procédé selon la revendication 2, **caractérisé en ce que**, pour chaque roue, on détermine à partir des données de capteurs ABS, dans quelle position d'angle de rotation la roue s'est trouvée quand on a commencé l'envoi du télégramme de données, et pour chaque roue, on calcule la déviation de cette position d'angle de rotation déterminée par rapport à la position d'angle de rotation de début d'envoi désirée,
dans lequel, à partir d'une série de télégrammes de données qui contiennent respectivement le même identifiant caractéristique, une valeur moyenne pondérée des déviations est calculée pour chaque roue et l'unité de surveillance de pression de pneus de l'identifiant caractéristique en question est associée à la roue pour laquelle la valeur moyenne pondérée des déviations est la plus petite,
dans lequel, lors du calcul des déviations de la valeur moyenne pondérée qui ont été calculées pour les télégrammes de données, chez lesquels la fiabilité de l'information dérivée des données d'accélération est plus élevée, obtiennent une pondération plus élevée, et des télégrammes de données chez lesquels la fiabilité de l'information dérivée des données d'accélération est plus faible, sont pris en compte avec une pondération plus faible.

4. Procédé selon l'une des revendications précédentes, **caractérisé en ce que** les données d'accélération proviennent à partir de mesures d'accélération d'un premier capteur d'accélération qui détecte des accélérations dans une première direction, et de mesures d'accélérations d'un deuxième capteur d'accélérations qui détecte des accélérations dans une deuxième direction, perpendiculaire à la première direction.

5. Procédé selon la revendication 4, **caractérisé en ce que** l'information dérivée des données d'accélération indique le sens de rotation.

6. Procédé selon la revendication 5, **caractérisé en ce que** l'information concernant la fiabilité de l'information dérivée des données d'accélération est en corrélation avec la probabilité que le sens de rotation transmis par l'unité de surveillance de pression de pneus est juste.

7. Procédé selon l'une des revendications 1 à 5, **caractérisé en ce que** l'information concernant la fiabilité de l'information dérivée des données d'accélération est contenue dans le télégramme de données sous forme d'un drapeau.

8. Système permettant la surveillance de pression de pneus avec des unités de surveillance de pression de pneus qui fonctionnent selon un procédé des revendications précédentes, et une unité d'évaluation centrale, laquelle reçoit et évalue des télégrammes de données envoyés par les unités de surveillance de pression de pneus, où l'unité d'évaluation centrale évalue l'information dérivée des données d'accélération contenues dans un télégramme de données en tenant compte de l'information concernant la fiabilité de l'information dérivée des données d'accélération ainsi que d'autres données qui sont fournies par des capteurs ABS.
